# EUROPEAN PATENT SPECIFICATION

(11) **EP 3 587 491 B1**
(45) Date of publication and mention of the grant of the patent: **31.01.2024**
(21) Application number: 18757584.0
(22) Date of filing: 26.02.2018
(51) Int. Cl.: C08L 51/00, C08F 265/06, C08J 3/12, C08L 33/06, C08L 33/08, C08L 33/12

(54) **RESIN COMPOSITION CONTAINING POLYMER PARTICLES**
HARZZUSAMMENSETZUNG MIT POLYMERTEILCHEN
COMPOSITION DE RÉSINE COMPRENANT DES PARTICULES POLYMÈRES

(30) Priority: 27.02.2017 JP 2017035483
(43) Date of publication of application: 01.01.2020
(73) Proprietor: Kuraray Co., Ltd., Kurashiki-shi, Okayama 710-0801 (JP)
(72) Inventor: KITADE Yasuhito, Tainai-shi Niigata 959-2691 (JP); OZAWA Hiroshi, Tainai-shi Niigata 959-2691 (JP)
(74) Representative: Müller-Boré & Partner Patentanwälte PartG mbB
(86) International application number: PCT/JP2018/006901
(87) International publication number: WO 2018/155677

(56) References cited:
- EP-A1- 1 964 856
- JP-A- 2003 277 412
- JP-A- 2004 131 668
- JP-A- 2006 131 803
- JP-A- 2008 006 774
- JP-A- 2012 180 454
- JP-A- 2016 222 744
- JP-A- 2016 222 744
- JP-A- 2017 119 784
- SATO,Hideki et al.: "Review on development of polypropylene manufacturing process", Technical journal of Sumitomo Chemical, vol. 2009-II, 25 November 2009 (2009-11-25), XP055536692,

## Description

The present invention according to the appended claims relates to a resin composition. More particularly, the present invention relates to a resin composition having less aggregation defects, and having excellent impact resistance and high-temperature whitening resistance.

Various resin compositions obtained by blending crosslinked rubber particles with a methacrylic resin have been proposed in order to improve various physical properties of the methacrylic resin.

For example, Patent Document 1 discloses an acrylic resin in which rubber particles are dispersed in a methacrylic resin as a resin which aims to improve warm-water whitening resistance.

Patent Document 2 discloses a methacrylic resin composition composed of 100 parts by mass in total of 60 to 98% by mass of a methacrylic resin and 40 to 2% by mass of multilayer structured polymer particles and 0.1 to 5 parts by mass of silicone fine particles in order to improve the impact resistance, lubricity and delustering property.

Patent Document 3 discloses a (meth) acrylic resin film composed of a resin containing acrylic rubber particles having an acid value of not less than 0.2 mmol/g, wherein the resin has a total acid value of not less than 0.15 mmol/g and not more than 1.5 mmol/g in order to improve the adhesiveness to metal.

Patent Document 4 discloses a resin composition for covering, which comprises a homopolymer of methyl methacrylate or a copolymer of methyl methacrylate and an acrylic acid ester, and an acrylic impact-resistance modifier.

Patent Document 5 discloses a functional optical material comprising a graft copolymer having a rigid inner layer, a soft intermediate layer and a rigid outer layer.

Patent Document 6 discloses a method for producing an impact-resistant methacrylic resin composition excellent in dispersion performance of multi-layer structured polymer fine particles, comprising homogeneously mixing 40 to 90 parts by weight of a multi-layer structured polymer (1) and 10 to 60 parts by weight of a rigid thermoplastic polymer (2), respectively in a latex state, then coagulating the resultant mixture and taking out to obtain an impact resistance modifier, and then melt-mixing 10 to 80 parts by weight of the impact resistance modifier and 20 to 90 parts by weight of a rigid methacrylic resin (3); wherein the multi-layer structured polymer (1) comprises a combination of at least one layer of soft polymer obtained by polymerizing a monomer mixture composed of 50 to 99.9% by weight of at least one alkyl acrylate in which the number of carbon atoms of an alkyl group is 1 to 8, and 0 to 50% by weight of unsaturated monomer copolymerizable with the alkyl acrylate, 0.1 to 5% by weight of poly-functional crosslinkable monomer and/or poly-functional graft monomer and at least one layer of a rigid polymer obtained by polymerizing a monomer mixture composed of 50 to 100% by weight of at least one alkyl methacrylate in which the number of carbon atoms of an alkyl group is 1 to 4, 0 to 50% by weight of unsaturated monomer copolymerizable with the alkyl methacrylate, and 0 to 5% by weight of poly-functional crosslinkable monomer and/or poly-functional graft monomer, and an outermost layer of a hard polymer obtained by polymerizing a monomer mixture composed of 50 to 100% by weight of at least one alkyl methacrylate in which the number of carbon atoms of an alkyl group is 1 to 4, and 0 to 50% by weight of unsaturated monomer copolymerizable with the alkyl methacrylate, wherein a proportion of the outermost layer relative to the total amount of the soft polymer layer and the rigid polymer layer is not less than 10% by weight; the rigid thermoplastic polymer (2) is obtained by emulsion polymerization of a monomer mixture composed of 50 to 100% by weight of at least alkyl methacrylate in which the number of carbon atoms of an alkyl group is 1 to 4 and 0 to 50% by weight of unsaturated monomer copolymerizable with the alkyl methacrylate; and the rigid methacrylic resin (3) is obtained by polymeriztion of monomer mixture composed of 50 to 100% by weight of at least one alkyl methacrylate in which the number of carbon atoms of an alkyl group is 1 to 4, 0 to 50% by weight of unsaturated monomer copolymerizable with the alkyl methacrylate.

### CITATION LIST

### PATENT LITERATURES

Patent Document 1 : JP 2003-277528 A
Patent Document 2 : JP 2004-263034 A
Patent Document 3 : WO 2012/053190 A1
Patent Document 4 : EP 0458520 A2
Patent Document 5 : WO 2014/162370 A1
Patent Document 6 : JP H7-300547 A

EP 1964856 A1 discloses a resin composition comprising the polymer particles (C) obtained by granulation, and suspension polymerization from a system comprising a latex of polymer fine particles (A) having a volume mean particle size of 1 to 50 µm, a polymerizable monomer (B), a polymerization initiator, a suspension dispersant and a coagulating agent, wherein the polymer particles have a volume mean particle size of 100 to 6, 000 *µ*m, and comprise fine powders of no greater than 50 *µ*m at a content of no higher than 15% by weight, wherein the polymer fine particles (A) and the polymerizable monomer (B) are included in a compounding ratio falling within the range of 0.5: 99.5 to 95: 5 (weight ratio (A) : (B)), and a substrate resin (D), wherein the substrate resin (D) is at least one selected from the group consisting of a thermoplastic resin, a thermosetting resin, and an elastomer.

JP 2016-222744 A discloses an example of the resin composition comprising the first methacrylic resin (A-1) having a weight average molecular weight of acetone soluble matter of about 96000, the acrylic three-layer structure particles (BX-1a) having weight average molecular weight of acetone soluble matter of about 85000 and the lubricant (X).

JP 2006-131803 A discloses an impact modifier comprising a multilayer structure graft copolymer in which an innermost layer, an intermediate layer and an outer layer are sequentially laminated, wherein the innermost layer of the multilayer structure graft copolymer comprises a innermost layer polymer (A) obtained by polymerizing a monomer component comprising 100 parts of a monomer mixture composed of 40 to 100% by mass of an alkyl methacrylate having an alkyl group having 1 to 4 carbon atoms, 0 to 60% by mass of an alkyl acrylate having an alkyl group having 1 to 8 carbon atoms and 0 to 20% by mass of other copolymerizable monomers and 0.1 to 10 parts by mass of polyfunctional monomer, the intermediate layer comprises an intermediate layer polymer (B) obtained by polymerizing a monomer component comprising 100 parts of a monomer mixture composed of 70 to 90% by mass of an alkyl acrylate having 1 to 8 carbon atoms in the alkyl group, 10 to 30% by mass of an aromatic vinyl compound and 0 to 20% by mass of other copolymerizable monomer and not less than 0.1 part by mass and not more than 1 part by mass of polyfunctional monomer in the presence of the innermost layer polymer (A), the outer layer comprises an outer layer polymer (C) obtained by polymerizing a monomer component comprising 50 to 100% by mass of an alkyl methacrylate having 1 to 4 carbon atoms in the alkyl group, 0 to 50% by mass of an alkyl acrylate having 1 to 8 carbon atoms in the alkyl group and 0 to 20% by mass of other copolymerizable monomer in the presence of the polymer formed up to the intermediate layer polymer (B), the outer layer polymer (C) has a glass transition point (Tg) of 20 to 80 °C, wherein a mass average particle diameter of the polymer formed up to the intermediate layer is 200 to 300 nm, a mass ratio (A)/(B) of the innermost layer polymer (A) and the intermediate layer polymer (B) is 10/90 to 40/60, and the amount of the outer layer polymer (C) is 30 to 100 parts by mass when the total of the innermost layer polymer (A) and the intermediate layer polymer (B) is 100 parts by mass.

An object of the present invention is to provide a resin composition having less aggregation defects, and excellent impact resistance and high-temperature whitening resistance.

Intensive studies for solving the above problems have resulted in completing the present invention as defined in the appended claims.

The resin composition of the present invention has less aggregation defects and excellent impact resistance and high-temperature whitening resistance.

The resin composition of the present invention comprises polymer particles I and polymer particles II. In the resin composition, the polymer particles I and the polymer particles II are preferably in the form of mixed particles.

In the resin composition of the present invention, the outermost layer of one polymer particle I may be fused to at least one polymer particle II, at least two polymer particles II may be fused to each other, or at least two polymer particles I may be fused to each other on the outermost layer. In the resin composition of the present invention, at least two polymer particles II may surround one polymer particle I and they may be fused to each other. In the resin composition of the present invention, the polymer particles I and the polymer particles II are preferably fused as mentioned above to have no space therebetween.

Each of the polymer particles I has a three-layered structure composed of an innermost layer, an intermediate layer, and an outermost layer.

The innermost layer of the polymer particles I is made of a rigid polymer c.

The rigid polymer c comprises a methacrylic acid ester unit.

The methacrylic acid ester unit is a unit in a polymer chain formed by polymerizaion of a methacrylic acid ester having only one polymerizable unsaturated carbon-carbon bond.

Examples of the methacrylic acid ester can include an alkyl methacrylate such as methyl methacrylate, ethyl methacrylate, n-butyl methacrylate, i-butyl methacrylate, t-butyl methacrylate, 2-ethylhexyl methacrylate, lauryl methacrylate, tridecyl methacrylate, and stearyl methacrylate; an aryl methacrylate such as phenyl methacrylate, tolyl methacrylate, xylyl methacrylate, and naphthyl methacrylate; a cycloalkyl methacrylate such as cyclohexyl methacrylate, norbornyl methacrylate, trimethylnorbornyl methacrylate, isobornyl methacrylate, dicyclopentanyl methacrylate; benzyl methacrylate; tetrahydrofurfuryl methacrylate; hydroxymethyl methacrylate, hydroxyethyl methacrylate, hydroxypropyl methacrylate, methoxyethyl methacrylate, ethoxyethyl methacrylate; dimethylaminoethyl methacrylate, diethylaminoethyl methacrylate, glycidyl methacrylate, and 4-hydroxybutyl methacrylate glycidyl ether. The methacrylic acid ester used in the rigid polymer c is preferably alkyl methacrylate, and the most preferably methyl methacrylate.

The mass of the methacrylic acid ester unit in the rigid polymer c is 80 to 100% by mass, preferably 85 to 99% by mass, and more preferably 90 to 97% by mass based on the mass of the rigid polymer c.

The rigid polymer c may comprise another monomer unit other than the methacrylic acid ester unit. Examples of the other monomer can include an alkyl acrylate; an aryl acrylate such as phenyl acrylate, tolyl acrylate, xylyl acrylate, and naphthyl acrylate; a cycloalkyl acrylate such as cyclohexyl acrylate, norbornyl acrylate, trimethylnorbornyl acrylate, isobornyl acrylate, and dicyclopentanyl acrylate; benzyl acrylate; tetrahydrofurfuryl acrylate; hydroxymethyl acrylate, hydroxyethyl acrylate, hydroxypropyl acrylate, methoxyethyl acrylate, ethoxyethyl acrylate; dimethylaminoethyl acrylate, diethylaminoethyl acrylate, glycidyl acrylate, 4-hydroxybutyl acrylate glycidyl ether; an aromatic vinyl monomer such as styrene and α-methylstyrene; a vinyl cyanide such as acrylonitrile and methacrylonitrile; vinyl ketone, vinyl chloride, vinylidene chloride; acrylamide, methacrylamide; acrylic acid, methacrylic acid, itaconic acid, crotonic acid; and a poly-functional monomer.

The rigid polymer c preferably comprises an alkyl acrylate unit and a poly-functional monomer unit as the other monomer unit.

Examples of the alkyl acrylate can include methyl acrylate, ethyl acrylate, n-butyl acrylate, i-butyl acrylate, t-butyl acrylate, 2-ethylhexyl acrylate, lauryl acrylate, tridecyl acrylate, and stearyl acrylate. Among these, methyl acrylate is preferable.

The mass of the alkyl acrylate unit in the rigid polymer c is preferably 0.05 to 20% by mass, more preferably 0.5 to 15% by mass, and further preferably 1 to 10% by mass based on the mass of the rigid polymer c.

Examples of the poly-functional monomer can include allyl methacrylate, allyl acrylate, monoallyl maleate, diallyl maleate, monoallyl fumarate, diallyl fumarate, crotyl acrylate, and crotyl methacrylate. Among these, allyl methacrylate is preferable.

The mass of the poly-functional monomer unit in the rigid polymer c is preferably 0.01 to 5% by mass, more preferably 0.03 to 2% by mass, and further preferably 0.06 to 1% by mass based on the mass of the rigid polymer c.

The rigid polymer c has a glass transition temperature of preferably 95 to 125°C, and more preferably 100 to 120°C. The glass transition temperature (Tg) of the rigid polymer c is an intermediate glass transition temperature, as measured according to "Method of measuring transition temperatures of plastics" of JIS K 7121 (1987), of a product as an independent rigid polymer c produced under the same conditions as the conditions in the process for forming the rigid polymer c in the production process of the polymer particle I.

The mass of the rigid polymer c is preferably 22 to 44% by mass, and more preferably 28 to 38% by mass based on the mass of the polymer particle I.

The intermediate layer of the polymer particle I is made of a soft polymer i.

The soft polymer i comprises an acrylic acid ester unit.

The acrylic acid ester unit is a unit in a polymer chain formed by polymerization of an acrylic acid ester unit having only one polymerizable unsaturated carbon-carbon bond.

Examples of the acrylic acid ester can include an alkyl acrylate such as methyl acrylate, ethyl acrylate, n-butyl acrylate, i-butyl acrylate, t-butyl acrylate, 2-ethylhexyl acrylate, lauryl acrylate, tridecyl acrylate, and stearyl acrylate; an aryl acrylate such as phenyl acrylate, tolyl acrylate, xylyl acrylate, and naphthyl acrylate; a cycloalkyl acrylate such as cyclohexyl acrylate, norbornyl acrylate, trimethylnorbornyl acrylate, isobornyl acrylate, and dicyclopentanyl acrylate; benzyl acrylate; tetrahydrofurfuryl acrylate; hydroxymethyl acrylate, hydroxyethyl acrylate, hydroxypropyl acrylate, methoxyethyl acrylate, ethoxyethyl acrylate; dimethylaminoethyl acrylate, diethylaminoethyl acrylate, glycidyl acrylate, and 4-hydroxybutyl acrylate glycidyl ether. Among these, an alkyl acrylate is preferable, and n-butyl acrylate is more preferable.

The mass of the acrylic acid ester unit in the soft polymer i is 40 to 99.9% by mass, preferably 55 to 95% by mass, and more preferably 60 to 90% by mass based on the mass of the soft polymer i.

The soft polymer i comprises a poly-functional monomer unit.

The poly-functional monomer unit is a unit in a polymer chain formed by polymerization of a methacrylic acid ester having not less than two polymerizable unsaturated carbon-carbon bonds. The poly-functional monomer unit can cross-link not less than two molecular chains.

Examples of the poly-functional monomer can include vinyl acrylate, allyl acrylate, methallyl acrylate; monoallyl maleate, diallyl maleate, monoallyl fumarate, diallyl fumarate, crotyl acrylate, crotyl methacrylate; 1,6-hexanediol diacrylate, 1,9-nonanediol diacrylate, 1,10-decanediol diacrylate, tricyclodecanedimethanol diacrylate, dipropylene glycol diacrylate, tripropylene glycol diacrylate, polypropylene glycol diacrylate, polyethylene glycol diacrylate, propoxylated bisphenol-A diacrylate, 9,9-bis[4-(2-acryloyloxyethoxy)phenyl]fluorene, 2-hydroxy-3-acryloxypropyl methacrylate, polytetramethylene glycol diacrylate, butylene glycol diacrylate; vinyl methacrylate, allyl methacrylate, methallyl methacrylate; ethylene glycol dimethacrylate, diethylene glycol dimethacrylate, triethylene glycol dimethacrylate, ethoxylated bisphenol-A dimethacrylate, tricyclodecanedimethanol dimethacrylate, 1,10-decanediol dimethacrylate, 1,6-hexanediol dimethacrylate, 1,9-nonanediol dimethacrylate, neopentyl glycol dimethacrylate, ethoxylated polypropylene glycol dimethacrylate, glycerin dimethacrylate, polypropylene glycol dimethacrylate, butylene glycol dimethacrylate; Divinylbenzene, trivinylbenzene; ethylene glycol diallyl ether, propylene glycol diallyl ether; butadiene; ethoxylated isocyanuric acid triacrylate, ε-caprolactone-modified tris-(2-acryloxyethyl)isocyanurate, ethoxylated glycerol triacrylate, pentaerythritol triacrylate, trimethylolpropane triacrylate, ditrimethylolpropane tetraacrylate, ethoxylated pentaerythritol tetraacrylate, pentaerythritol tetraacrylate, dipentaerythritol polyacrylate, dipentaerythritol hexaacrylate, and trimethylolpropane trimethacrylate. Among these, allyl methacrylate is preferable.

The mass of the poly-functional monomer unit in the soft polymer i is 0.1 to 5% by mass, preferably 0.5 to 4.5% by mass, and more preferably 1 to 4% by mass based on the mass of the soft polymer i.

The soft polymer i may comprise another monomer unit other than the acrylic acid ester unit and the poly-functional monomer unit. Examples of the other monomer can include an alkyl methacrylate, an aryl methacrylate, a cycloalkyl methacrylate, benzyl methacrylate, tetrahydrofurfuryl methacrylate; hydroxymethyl methacrylate, hydroxyethyl methacrylate, hydroxypropyl methacrylate, methoxyethyl methacrylate, ethoxyethyl methacrylate; dimethylaminoethyl methacrylate, diethylaminoethyl methacrylate, glycidyl methacrylate, 4-hydroxybutyl methacrylate glycidyl ether; an aromatic vinyl monomer, a vinyl cyanide such as acrylonitrile and methacrylonitrile; vinyl ketone; vinyl chloride, vinylidene chloride; acrylamide, methacrylamide; acrylic acid, methacrylic acid, itaconic acid, and crotonic acid.

The soft polymer i preferably comprises an aromatic vinyl monomer unit as the other monomer unit. The aromatic vinyl monomer unit is a unit in a polymer chain formed by polymerization of an aromatic compound having only one polymerizable unsaturated carbon-carbon bond.

Examples of the aromatic vinyl monomer can include styrene, α-methyl styrene, o-methyl styrene, m-methyl styrene, p-methyl styrene, o-ethyl styrene, m-ethyl styrene, p-ethyl styrene, o-n-propyl styrene, m-n-propyl styrene, p-n-propyl styrene, o-isopropyl styrene, m-isopropyl styrene, p-isopropyl styrene, m-n-butyl styrene, p-n-butyl styrene, p-t-butyl styrene, 4-butenyl styrene, 2,4-dimethyl styrene, 2,5-dimethyl styrene, 3,5-dimethyl styrene, mesityl styrene; p-phenyl styrene; o-fluorostyrene, m-fluorostyrene, p-fluorostyrene, o-chlorostyrene, m-chlorostyrene, p-chlorostyrene, o-bromostyrene, m-bromostyrene, p-bromostyrene, o-methyl-p-fluorostyrene; o-methoxy styrene, m-methoxy styrene, and p-methoxy styrene.

The mass of the the aromatic vinyl monomer unit in the soft polymer i is preferably 1 to 40% by mass, more preferably 4 to 35% by mass, and further preferably 9 to 30% by mass based on the mass of the soft polymer i.

The soft polymer i has a glass transition temperature of less than 25°C, and preferably -30 to 20°C. The glass transition temperature (Tg) of the soft polymer i is an intermediate glass transition temperature, as measured according to "Method of measuring transition temperatures of plastics" of JIS K 7121 (1987), of a product as an independent soft polymer i produced under the same conditions as the conditions in the process for forming the soft polymer i in the production process of the polymer particles I.

The mass of the soft polymer i is preferably 35 to 57% by mass, and more preferably 41 to 51% by mass based on the mass of the polymer particles I.

The outermost layer is made of a rigid polymer o. The rigid polymer o comprises a methacrylic acid ester unit.

The methacrylic acid ester unit is a unit in a polymer chain formed by polymerization of a methacrylic acid ester having only one polymerizable unsaturated carbon-carbon bond.

Examples of the methacrylic acid ester can include those as described for the rigid polymer c. The methacrylic acid ester is preferably an alkyl methacrylate, and most preferably methyl methacrylate.

The mass of the methacrylic acid ester unit in the rigid polymer o is 80 to 100% by mass, preferably 85 to 99% by mass, and more preferably 90 to 97% by mass based on the mass of the rigid polymer o.

The rigid polymer o may comprise another monomer unit other than the methacrylic acid ester unit. Examples of the other monomer can include those as described for the rigid polymer c. The other monomer is preferably an alkyl acrylate, more preferably an alkyl acrylate in which the number of carbon atoms of the alkyl group is 1 to 8, and most preferably methyl acrylate.

The mass of the alkyl acrylate unit in the rigid polymer o is preferably 0.05 to 20% by mass, more preferably 0.5 to 15% by mass, and further preferably 1 to 10% by mass based on the mass of the rigid polymer o.

The rigid polymer o has a glass transition temperature of preferably 95 to 125°C, more preferably 100 to 120°C, and further preferably 105 to 120°C. The glass transition temperature (Tg) of the rigid polymer o is an intermediate glass transition temperature, as measured according to "Method of measuring transition temperatures of plastics" of JIS K 7121 (1987), of a product as an independnet rigid polymer o produced under the same conditions as the conditions in the process for forming the rigid polymer o in the production process of the polymer particles I.

The mass of the rigid polymer o is preferably 11 to 31% by mass, and more preferably 15 to 25% by mass based on the mass of the polymer particles I.

In the polymer particles I, a weight-average molecular weight of an acetone soluble-matter is 70,000 to 100,000, and preferably 75,000 to 95,000. In the polymer particles I, the mass of an acetone insoluble-matter is preferably not less than 50% by mass, and more preferably 60 to 98% by mass based on the mass of the polymer particles I.

The polymer particles I have a volume average particle diameter as measured by the light-scattering method of 150 to 300 nm, and preferably 180 to 250 nm. The resin composition of the present invention having the volume average particle diameter of not less than 150 nm has excellent impact resistance. The resin composition of the present invention having the volume average particle diameter of not more than 300 nm tends to have less aggregation defects, and to have excellent high-temperature whitening resistance.

Each of the polymer particles II has a single-layered structure composed of only a layer made of a rigid polymer s.

The rigid polymer s comprises a methacrylic acid ester unit.

The methacrylic acid ester unit is a unit in a polymer chain formed by polymerization of a methacrylic acid ester having only one polymerizable unsaturated carbon-carbon bond.

Examples of the methacrylic acid ester can include those as described for the rigid polymer c. The methacrylic acid ester is preferably an alkyl methacrylate, and most preferably methyl methacrylate.

The mass of the methacrylic acid ester unit in the rigid polymer s is preferably 80 to 100% by mass, more preferably 82 to 97% by mass, and further preferably 83 to 94% by mass based on the mass of the rigid polymer s.

The rigid polymer s may comprise another monomer unit other than the methacrylic acid ester unit. Examples of the other monomer can include those as described for the rigid polymer c. The other monomer is preferably an alkyl acrylate, more preferably an alkyl acrylate in which the number of carbon atoms of the alkyl group is to 8, and most preferably methyl acrylate.

The mass of the alkyl acrylate unit in the rigid polymer s is preferably 0.05 to 20% by mass, more preferably 0.5 to 18% by mass, and further preferably 1 to 17% by mass based on the mass of the rigid polymer s.

The rigid polymer s has a glass transition temperature of preferably not less than 95°C, more preferably not less than 100°C, and further preferably not less than 105°C. The glass transition temperature (Tg) of the rigid polymer s is an intermediate glass transition temperature as measured according to "Method of measuring transition temperatures of plastics" of JIS K 7121 (1987).

In the polymer particles II, a weight-average molecular weight of an acetone soluble-matter is 60,000 to 90,000, preferably 65,000 to 85,000, and more preferably 65,000 to 75,000. According to the present claims, the weight-average molecular weight of the acetone soluble-matter in the polymer particles II is smaller than the weight-average molecular weight of the acetone soluble-matter in the polymer particles I by not less than 5000. The mass of the acetone insoluble-matter in the polymer particles II is preferably not more than 5% by mass, more preferably not more than 2% by mass, and most preferably 0% by mass based on the mass of the polymer particles II. When the above-identified mass is within the above range, the resin composition of the present invention tends to have less aggregation defects.

The polymer particles II have a volume average particle diameter as measured by the light-scattering method of not more than 150 nm, and preferably 85 to 135 nm. When the above-identified volume average particle diameter is within the above range, the resin composition of the present invention tends to have less aggregation defects. The volume average particle diameter of the polymer particles II is preferably smaller than that of the polymer particles I, a difference between the volume average particle diameter of the polymer particles II and the volume average particle diameter of the polymer particles I is preferably not less than 50 nm, and more preferably not less than 90 nm.

The mass ratio of polymer particles I / polymer particles II in the mixed particles to be used in the present invention is 55/45 to 75/25, preferably 57/43 to 72/28, and more preferably 60/40 to 70/30. When the above-identified ratio is not less than 55/45, the resin composition of the present invention is excellent in impact resistance. When the above-identified ratio is not more than 75/25, the resin composition of the present invention tends to have less aggregation defects and excellent high-temperature whitening resistance.

The resin composition of the present invention may further comprises a thermoplastic resin other than the mixed particles. Examples of the thermoplastic resin that can be used for the present invention can include polycarbonate, polyester, polyamide, polyvinyl chloride, polyvinylidene fluoride, polyvinyl acetate, maleic acid copolymer, methacrylic resin, an ABS resin, an AES resin, an AS resin, polycycloolefin, and polyolefin. Among these, a methacrylic resin is preferable. In the resin composition of the present invention, the mass ratio of thermoplastic resin / mixed particles is preferably 10/90 to 90/10, and more preferably 20/80 to 80/20. In the thermoplastic resin of the present invention, the polymer particles I, the polymer particles II and the thermoplastic resin are preferably fused to each other so as to have no space among the polymer particles I, the polymer particles II and the thermoplastic resin. Furthermore, at least a part of the polymer particles II may be fused to the thermoplastic resin.

The methacrylic resin that can be used in the resin composition of the present invention is a resin comprising a methyl methacrylate unit and as necessary an acrylic acid ester unit. The methacrylic resin may comprise another methacrylic acid ester unit other than methyl methacrylate or the other monomer unit. The mass of the methyl methacrylate unit in the methacrylic resin is preferably 85 to 100% by mass, and more preferably 92 to 100% by mass based on the mass of the methacrylic resin. The mass of the acrylic acid ester unit in the methacrylic resin is preferably 0 to 15% by mass, and more preferably 0 to 8% by mass based on the mass of the methacrylic resin. The acrylic acid ester is preferably an alkyl acrylate in which the number of carbon atoms of the alkyl group is 1 to 6. The mass ratio of methacrylic resin / mixed particles in the resin composition of the present invention is preferably 20/80 to 80/20, and more preferably 30/70 to 50/50.

The methacrylic resin to be used for the resin composition of the present invention has a glass transition temperature of preferably not less than 95°C, more preferably not less than 100°C, and further preferably not less than 105°C. The glass transition temperature of the methacrylic resin is an intermediate glass transition temperature as measured according to "Method of measuring transition temperatures of plastics" of JIS K 7121 (1987).

The methacrylic resin has a melt flow rate (according to ASTM-D1238) at 230°C and under a load of 3.8 kg of preferably 0.5 to 20 g/10min, and more preferably 0.8 to 10 g/10min. The methacrylic resin is not particularly limited by the production method thereof. The methacrylic resin can be produced by, for example, well-known polymerization reaction such as a radical polymerization reaction and an anionic polymerization reaction. Polymerization reaction in production of a methacrylic resin can be carried out by a bulk polymerization method and a solution polymerization method.

The resin composition of the present invention may comprise a well-known additive for resin, as necessary, such as ultraviolet absorbers, antioxidizing agents, light stabilizers, antioxidant, plasticizer, polymer processing aids, lubricant, dyes, and pigment. The total content of the additives for resin is preferably not more than 20% by mass relative to 100% by mass of the resin composition.

The resin composition of the present invention is not particularly limited by the production method thereof.

One method for producing the resin composition of the present invention comprises carrying out emulsion polymerization c of a methacrylic acid ester and another monomer copolymerizable therewith, emulsion polymerization i of an acrylic acid ester, a poly-functional monomer and another monomer copolymerizable therewith, and emulsion polymerization o of an methacrylic acid ester and another monomer copolymerizable therewith, sequentially in this order, to obtain a latex comprising the polymer particles I;
carrying out emulsion polymerization s of a methacrylic acid ester and another monomer copolymerizable therewith, to obtain a latex comprising the polymer particles II and
mixing the latex comprising the polymer particles I and the latex comprising the polymer particles II.

A methacrylic acid ester and another monomer copolymerizable therewith in an amount necessary to form the rigid polymer c, specifically, 80 to 100% by mass, preferably 85 to 99% by mass, and more preferably 90 to 97% by mass of a methacrylic acid ester and 0 to 20% by mass, preferably 1 to 15% by mass, and more preferably 3 to 10% by mass of another monomer copolymerizable therewith are prepared and emulsified to carry out the emulsion polymerization c of the methacrylic acid ester and the other monomer copolymerizable therewith. Thus, a latex comprising the polymer particles c can be obtained, wherein each of the polymer particles c has a single-layered structure composed of only a layer made of the rigid polymer c.

An acrylic acid ester, a poly-functional monomer and another monomer copolymerizable therewith in an amount necessary to form the soft polymer i, specifically, 40 to 99.9% by mass, preferably 55 to 95% by mass, and more preferably 60 to 90% by mass of the acrylic acid ester, 0.1 to 5% by mass, preferably 0.5 to 4.5% by mass, and more preferably 1 to 4% by mass of the poly-functional monomers, and 0 to 59.9% by mass, preferably 0 to 44.5% by mass, and more preferably 0 to 39% by mass of the other monomer copolymerizable therewith are prepared and added to the latex comprising the polymer particles c, and the resultant is emulsified to carry out the emulsion polymerization i of the acrylic acid ester, the poly-functional monomer and the other monomer copolymerizable therewith. Thus, a latex comprising the polymer particles i can be obtained, wherein each of the polymer pariticles i has a two-layered structure composed of a layer made of the rigid polymer c and a layer made of the soft polymer i.

A methacrylic acid ester and another monomer copolymerizable therewith in an amount necessary to form the rigid polymer o, specifically, 80 to 100% by mass, preferably 85 to 99% by mass and more preferably 90 to 97% by mass of the methacrylic acid ester, and 0 to 20% by mass, preferably 1 to 15% by mass and more preferably 3 to 10% by mass of the other monomer copolymerizable therewith are prepared and added to the latex comprising the polymer particles i, and the resultant is emulsified to carry out the emulsion polymerization o of the methacrylic acid ester and the other monomer copolymerizable therewith. Thus, a latex comprising the polymer particles I can be obtained, wherein each of the polymer particles I has a three-layered structure composed of an innermost layer made of the rigid polymer c, an intermediate layer made of the soft polymer i, and an outermost layer made of the rigid polymer o.

A methacrylic acid ester and another monomer copolymerizable therewith in an amount necessary to form the rigid polymer s, specifically, 80 to 100% by mass, preferably 82 to 97% by mass and more preferably 83 to 94% by mass of the methacrylic acid ester and 0 to 20% by mass, preferably 3 to 18% by mass and more preferably 6 to 17% by mass of the other monomer copolymerizable therewith are prepare and emulsified to carry out the emulsion polymerization s of the methacrylic acid ester and the other monomer copolymerizable therewith. Thus, a latex comprising the polymer particles II can be obtained, wherein each of the polymer particles II has a single-layered structure composed of only one layer made of the rigid polymer s.

In the above each polymerization, a chain transfer agent can be used for adjusting the molecular weight. The chain transfer agent to be used in each polymerization is not particularly limited. Examples of the chain transfer agent can include an alkyl mercaptan such as n-octylmercaptan, n-dodecylmercaptan, t-dodecylmercaptan, and n-hexadecylmercaptan; a xanthogendisulfide such as dimethyl xanthogendisulfide, and diethyl xanthogendisulfide; a thiuram disulfide such as tetrathiuram disulfide; and a halogenated hydrocarbon such as carbon tetrachloride and ethylene bromide. The amount of the chain transfer agent to be used can be appropriately set in such a rage that the each polymer can be adjusted to a predetermined molecular weight in the each polymerization. In particular, in order to adjust the weight-average molecular weight of the acetone soluble-matter of the polymer particles I, the amount of the chain transfer agent to be used in the emulsion polymerization o is preferably 0.05 to 0.5 part by mass, and more preferably 0.1 to 0.4 part by mass relative to 100 parts by mass of monomers to be used in the emulsion polymerization o.

In the above each polymerization, an emulsifier can be used for emulsifying monomers. By changing the use amount of the emulsifier, volume average particle diameter of the polymer particles can be changed. The emulsifier to be used in the each polymerization is not particularly limited. Examples of the emulsifier can include an anionic surfactant, a nonionic surfactant, and an amphoteric surfactant. The amount of the emulsifier to be used in the each polymerization is somewhat different depending upon types of emulsifiers. The amount of the emulsifier used in the each polymerization is not particularly limited as long as it is possible to form micelles having a predetermined polymer particle size. From the mass proportion of monomers to be used in the emulsion polymerization c, the emulsion polymerization i and the emulsion polymerization o, a volume proportion of the each polymer is estimated. From the cube root of the volume proportion, the proportion of the particle sizes of the polymer particles c, i and o obtained after completion of the each emulsion polymerization can be estimated. Based on this, the size of the micelles can be set.

Mixing of the latex comprising the polymer particles I and the latex comprising the polymer particles II is carried out with the latex comprising the polymer particles I and the latex comprising the polymer particles II in a predetermined amount necessary to form mixed particles. Then, as necessary, the obtained mixed latex is coagulated to obtain a slurry, the slurry is washed and dehydrated, and then the dehydrated slurry is dried. Thus, the resin composition of the present invention comprising a powder composed of dried mixed partices can be obtained, wherein the each dried mixed partice is a coagulated product of the polymer particles I and the polymer particles II.

Coagulation of the latex can be carried out by the well-known method. Examples of coagulation method can include a freeze coagulation method, a salting out coagulation method, and an acid-precipitation coagulation method. Among these, a freeze coagulation method or a salting out coagulation method is preferable.

By washing and dehydration of the slurry, water-soluble components such as an emulsifier or a catalyst can be removed from the slurry. Washing and dehydration of the slurry can be carried out using, for example, a filter press, a belt press, a Gina centrifugal separator, and a screw decanter centrifugal separator. From the viewpoint of productivity and washing efficiency, a screw decanter centrifugal separator is preferably used. The washing and dehydration of the slurry is preferably carried out at least twice. As the frequency of the washing and dehydration is increased, the remaining amount of the water-soluble component is reduced. However, from the viewpoint of productivity, the frecuency of the washing and dehydration is preferably not more than three.

Drying of the slurry is performed such that the water content is preferably less than 1. 0% by mass, more preferably less than 0.5% by mass, further preferably less than 0.3% by mass.

Another preferable method for producing the resin composition of the present invention comprises mixing the polymer particles I, each having a three-layered structure composed of an innermost layer made of a rigid polymer c comprising 80 to 100% by mass of a methacrylic acid ester unit, an intermediate layer made of a soft polymer i comprising 40 to 99.9% by mass of an acrylic acid ester unit and 0.1 to 5% by mass of a poly-functional monomer unit whrein the soft polymer i has a glass transition temperature of less than 25°C, and an outermost layer made of a rigid polymer o comprising 80 to 100% by mass of a methacrylic acid ester unit, wherein the polymer partilces I have a weight-average molecular weight of an acetone soluble-matter of 70,000 to 100,000, and a volume average particle diameter determined by a light-scattering method of 150 to 300 nm; and polymer particles II, each having a single-layered structure composed of only a layer made of a rigid polymer s comprising 80 to 100% by mass of a methacrylic acid ester unit, wherein the polymer particles II have a weight-average molecular weight of an acetone soluble-matter of 60,000 to 90,000, and a volume average particle diameter determined by a light-scattering method of not more than 150 nm, in a mass ratio of the polymer particles I / polymer particles II of 55/45 to 75/25 to obtain mixed particles; and melt-kneading the mixed particles and a thermoplastic resin.

The mixed particles may be obtained by mixing the latex comprising the polymer particles I and the latex comprising the polymer particles II to obtain a mixed latex, then coagulating the mixed latex, and drying the resultant coagulated product.

Melt-kneading of a thermoplastic resin and mixed particles can be performed by a conventionally known method. In melt-kneading, for example, a continuous type kneader such as a single screw kneading extruder, a twin screw kneading extruder, and a multiaxial kneader, a batch type kneader such as an internal mixer, and a pressure kneader can be used.

For facilitating transportation, storage, or forming, the methacrylic resin composition of the present invention is preferably pelletized. In pelletizing, a thermoplastic resin, an additive for resin, and the like, may be melt-kneaded with the mixed particles. An extruder to be used in pelletizing is preferably equipped with a vent. The vent is preferably a vacuum vent or an open vent. At least one vent is preferably placed in the downstream side from the resin melting starting part. Note here that pressure in the vacuum vent is preferably not more than 50 Torr, more preferably not more than 30 Torr, and further preferably not more than 10 Torr. When the pressure in the vacuum vent is within the above range, devolatilization efficiency is high, and residual moisture and monomer can be reduced.

The extruder to be used for pelletizing are preferably a single screw extruder or a twin screw extruder. In particular, a single screw extruder has small shear energy on a resin composition, and thermal decomposition of a polymer can be suppressed.

A cylinder heating temperature of the extruder to be used for pelletizing is preferably 210 to 270°C, more preferably 220 to 260°C, and further preferably 230 to 250°C. Residence time in the extruder is preferably not more than 7 minutes, more preferably not more than 5 minutes, and further preferably not more than 3 minutes. As the cylinder heating temperature is higher or the residence time is longer, shear energy on the resin composition is larger, and thus, thermal decomposition of a polymer tends to proceed. As a result, high-temperature whitening resistance tends to be reduced.

The resin film of the present invention comprises a resin composition comprising the mixed particles and a thermoplastic resin. The resin film of preferable embodiment of the present invention comprises a resin composition comprising the mixed particles and a methacrylic resin. The resin film of the present invention can be obtained by performing, for example, extrusion molding of the resin composition. In the resin composition, the mass ratio of the thermoplastic resin / the mixed particles is preferably 20/80 to 80/20, and more preferably 30/70 to 50/50.

It is preferable that before film formation, the resin composition is dried to reduce the water content. The water content of the resin composition before extrusion molding is preferably less than 0.2% by mass, and more preferably less than 0.1% by mass. As the water content is higher, occurrence of silver streak and deterioration of high-temperature whitening resistance may easily be caused.

It is preferable that the resin composition contains an ultraviolet absorber. Examples of the ultraviolet absorber can include a reactive ultraviolet absorber such as 2-[2-hydroxy-5-(2-methacryloyloxy ethyl)phenyl]-2H-1,2,3-benzotriazole. The content of the ultraviolet absorber is preferably 0.05 to 5 parts by mass relative to 100 parts by mass of the total amount of the mixed particles and the thermoplastic resin.

It is preferable that the extruder to be used for film formation is equipped with a vent. The vent is preferably a vacuum vent or an open vent. At least one vent is preferably placed in the downstream side from the resin melting starting part. Note here that pressure in the vacuum vent is preferably not more than 50 Torr, more preferably not more than 30 Torr, and further preferably not more than 10 Torr. The extruder to be used for film formation is preferably a single screw extruder or a twin screw extruder rotated in the same direction.

A cylinder heating temperature of the extruder to be used for film formation is preferably 220 to 300°C, more preferably 230 to 290°C, and further preferably 240 to 280°C. Residence time of the extruder to be used for film formation is preferably not more than 7 minutes, more preferably not more than 5 minutes, and further preferably not more than 3 minutes. As the cylinder heating temperature is higher or the residence time is longer, shear energy on the resin composition is larger, and thus, thermal decomposition of a polymer tends to proceed and high-temperature whitening resistance tends to be deteriorated. Therefore, in the extrusion molding for film formation, it is preferable that the residence time is not more than 5 minutes and the resin temperature is not more than 280°C in an extruder.

The resin film of the present invention is excellent in impact resistance, and further excellent in high-temperature whitening resistance. Further, even when the resin film is exposed to warmed water and boiling water, whitening does not easily occur. Since the resin film of the present invention is excellent in adhesiveness to another polymer, in particular, a thermoplastic polymer, it can be used for a layered product comprising the resin film of the present invention and a thermoplastic polymer molded product.

The other thermoplastic polymer to be used for the layered product is not particularly limited. As the other thermoplastic polymer, mentioned is preferably a polycarbonate polymer, a vinyl chloride polymer, a vinylidene fluoride polymer, a vinyl acetate polymer, a maleic acid copolymer, a methacrylic polymer, an ABS resin, an AES resin, or an AS resin, because they give good adhesiveness to the resin film of the present invention. The thermoplastic polymer molded product may be planar molded products such as a film, sheet and plate, linear molded products such as tube and stick, and molded products having shapes of lens, prism, container, and other various shapes. The layered product is not particularly limited by the production method. The layered product can be obtained by, for example, co-extrusion molding, covering extrusion molding, insert molding, press molding, heat sealing, or adhesion.

Hereinafter, the present invention will be described more specifically by showing Production Examples, Examples, and Comparative Examples. However, the present invention is not limited to the following Examples. Note here that, "part" represents part by mass, and "%" represents % by mass.

### (Volume average particle diameter)

Volume average particle diameter Dv of latex comprising polymer particles is determined by a light-scattering method using a laser diffraction/scattering particle diameter distribution measurement device LA-950V2 manufactured by HORIBA, Ltd.

### (Weight-average molecular weight)

Polymer particle dried product was soaked in acetone over night to obtain a solution. The solution was subjected to centrifugal separation to be divided into an acetone insoluble-matter and an acetone soluble-matter. Dry mass of the acetone insoluble-matter was measured.

The acetone soluble-matter was dried and solidified.

A weight-average molecular weight Mw of the solidified acetone soluble-matter was determined by gel permeation chromatography under the following conditions.
Apparatus: HLC-8320, manufactured by TOSOH CORPORATION,
Separation column: TSKguardcolumnSuperHZ-H, TSKgelHZM-M and TSKgelSuperHZ4000, manufactured by TOSOH CORPORATION, connected in series
Eluent: Tetrahydrofuran
Eluent flow rate: 0.35 ml/min
Column temperature: 40°C
Detection method: Differential refractive index (RI)
Calibration curve: standard polymethyl methacrylate

### (Glass transition temperature)

The glass transition temperatures (Tg) of a rigid polymer c, a soft polymer i, and a rigid polymer o are intermediate glass transition temperatures, as measured according to "Method of measuring transition temperatures of plastics" of JIS K 7121 (1987), of each independent polymer produced in the same conditions as in the process for forming each of the polymers in production of polymer particles I. The glass transition temperature (Tg) of the rigid polymer s is an intermediate glass transition temperature as measured according to "Method of measuring transition temperatures of plastics" of JIS K 7121 (1987).

### (Aggregation defect)

The resin composition pellet was put in an FSA film examination line, the number of fish eyes per cm² having a size of not less than 30 um was counted, and the aggregation defect was evaluated as according to the following criteria.
∘: less than 7 fish eyes/cm²
Δ: not less than 7 and less than 10 fish eyes/cm²
×: not less than 10 fish eyes/cm²

Note here that the FSA film examination line is an examination apparatus comprising an extruder, a winder, and a camera unit, a film having a predetermined size is automatically produced by putting pellets therein, and the film can be automatically observed and the number of fish eyes can be counted.

### (High-temperature whitening resistance)

The resin composition was heat pressed to produce a flat plate having a thickness of 3 mm, the flat plate was left to stand in a dryer at 50°C for four hours, and then haze of the flat plate was measured. The high-temperature whitening resistance was evaluated based on the following criteria.
Less than 2.5%: o
Not less than 2.5%: ×

### (Impact resistance)

The resin composition was heat pressed to produce a flat plate having a thickness of 3 mm. A Charpy impact test piece having a thickness of 3 mm according to JIS-K7111 was produced from the flat plate. This test piece was subjected to a measurement according to JIS-K7111 under the conditions of a temperature at 23°C and a humidity of 47% to measure an impact value. The measurement was performed ten times, and an average value thereof was employed.

### <Production Example 1>

To a reactor vessel equipped with a condenser, a thermometer and a stirrer and having glass lining, 100 parts of ion-exchanged water was charged, then, 0.017 part of sodium polyoxyethylene alkyl ether acetate (NIKKOL-ECT-3NEX) and 0.10 part of sodium carbonate were added and dissolved therein. The inside of the reactor vessel was substituted with nitrogen gas and made to be a state in which oxygen was not substantially present. Thereafter, the inside of the reactor vessel was heated such that the aqueous solution was 80°C.

In the aqueous solution, 0.035 part of potassium persulfate was added, and further, mixture c composed of 32.6 parts of methyl methacrylate, 2.1 parts of methyl acrylate, and 0.07 part of allyl methacrylate was added over 50 minutes without interruption. After completion of addition of the mixture c, the resultant was retained for 40 minutes, and emulsion polymerization was performed to obtain latex c.

Then, to the latex c, 0.045 part of potassium persulfate was added, and further, a mixture i composed of 36.6 parts of butyl acrylate, 7.9 parts of styrene, and 0.89 part of allyl methacrylate was added over 60 minutes without interruption. After completion of addition of the mixture i, the resultant was retained for 90 minutes, and seed emulsion polymerization was performed to obtain latex i.

Next, to the latex i, 0.02 part of potassium persulfate was added, and further, a mixture o composed of 18.6 parts of methyl methacrylate, 1.2 parts of methyl acrylate, and 0.04 part of n-octyl mercaptan was added over 30 minutes without interruption. After completion of addition of the mixture o, the resultant was retained for 60 minutes, and seed emulsion polymerization was performed to obtain latex 1-1. Physical properties of polymer particles 1-1 contained in the latex I-1 are shown in Table 1.

### <Production Example 2>

To a reactor vessel equipped with a condenser, a thermometer, and a stirrer and having glass lining, 150 parts of ion-exchanged water was charged, then, 0.120 part of sodium polyoxyethylene alkyl ether acetate (NIKKOL-ECT-3NEX) and 0.10 part of sodium carbonate were added and dissolved therein. The inside of the reactor vessel was substituted with nitrogen gas and made to be a state in which oxygen is not substantially present. Thereafter, the inside of the reactor vessel was heated such that the aqueous solution was 80°C.

In the aqueous solution, 0.10 part of potassium persulfate was added, and further, a mixture s composed of 90.0 parts of methyl methacrylate, 6.0 parts of methyl acrylate and 0.44 part of n-octyl mercaptan was added over 120 minutes without interruption. After completion of addition of the mixture s, the resultant was retained for 60 minutes, and emulsion polymerization was performed to obtain latex II-1. Physical properties of polymer particles II-1 contained in the latex II-1 are shown in Table 2.

### Example 1

In a vessel equipped with a stirrer, 65 parts (solid content) of the latex I-1 and 35 parts (solid content) of the latex II-1 were charged, followed by mixing homogeneously. Thereafter, a magnesium sulfate aqueous solution was added thereto for salting out and coagulation. The coagulated product was washed with water, dehydrated, and dried to obtain mixed particles.

Sixty parts of the mixed particles and 40 parts of methacrylic resin (Parapet "G-1000" manufactured by KURARAY Co., Ltd.) were put into an extruder for producing pellets to obtain resin composition pellets. Evaluation results of the resin composition are shown in Table 3.

### Example 2

Latex 1-2 was obtained by the same manner as in Production Example 1 except that the amount of sodium polyoxyethylene alkyl ether acetate was changed to 0.014 part. Physical properties of polymer particles 1-2 contained in the latex I-2 are shown in Table 1.

In a vessel equipped with a stirrer, 60 parts (solid content) of the latex I-2 and 40 parts (solid content) of the latex II-1 were charged, followed by mixing homogeneously. Thereafter, a magnesium sulfate aqueous solution was added thereto for salting out and coagulation. The coagulated product was washed with water, dehydrated, and dried to obtain mixed particles.

Sixty parts of the mixed particles and 40 parts of methacrylic resin (Parapet "G-1000" manufactured by KURARAY Co., Ltd.) were put into an extruder for producing pellets to obtain resin composition pellets. Evaluation results of the resin composition are shown in Table 3.

### Example 3

Latex I-3 was obtained by the same manner as in Production Example 1 except that the amount of sodium polyoxyethylene alkyl ether acetate was changed to 0.035 part and the amount of n-octyl mercaptan was changed to 0.05 part. Physical properties of polymer particles I-3 contained in the latex 1-3 are shown in Table 1.

Latex II-2 was obtained by the same manner as in Production Example 2 except that composition of monomer was changed as in Table 2, the amount of sodium polyoxyethylene alkyl ether acetate was changed to 0.175 part, and the amount of n-octyl mercaptan was changed to 0.50 part. Physical properties of polymer particles II-2 contained in the latex II-2 are shown in Table 2.

In a vessel equipped with a stirrer, 70 parts (solid content) of the latex I-3 and 30 parts (solid content) of the latex II-2 were charged, followed by mixing homogeneously. Thereafter, a magnesium sulfate aqueous solution was added thereto for salting out and coagulation. The coagulated product was washed with water, dehydrated, and dried to obtain mixed particles.

Sixty parts of the mixed particles and 40 parts of methacrylic resin (Parapet "G-1000" manufactured by KURARAY Co., Ltd.) were put into an extruder for producing pellets to obtain resin composition pellets. Evaluation results of the resin composition are shown in Table 3.

### Comparative Example 1

In a vessel equipped with a stirrer, 85 parts (solid content) of the latex I-1 and 15 parts (solid content) of the latex II-1 were charged, followed by mixing homogeneously. Thereafter, a magnesium sulfate aqueous solution was added thereto for salting out and coagulation. The coagulated product was washed with water, dehydrated, and dried to obtain mixed particles.

Sixty parts of the mixed particles and 40 parts of methacrylic resin (Parapet "G-1000" manufactured by KURARAY Co., Ltd.) were put into an extruder for producing pellets to obtain resin composition pellets. Evaluation results of the resin composition are shown in Table 3.

### Comparative Example 2

Latex I-4 was obtained by the same manner as in Production Example 1 except that the amount of sodium polyoxyethylene alkyl ether acetate was changed to 0.004 part. Physical properties of polymer particles I-4 contained in the latex I-4 are shown in Table 1.

In a vessel equipped with a stirrer, 65 parts (solid content) of the latex I-4 and 35 parts (solid content) of the latex II-1 were charged, followed by mixing homogeneously. Thereafter, a magnesium sulfate aqueous solution was added thereto for salting out and coagulation. The coagulated product was washed with water, dehydrated, and dried to obtain mixed particles.

Sixty parts of the mixed particles and 40 parts of methacrylic resin (Parapet "G-1000" manufactured by KURARAY Co., Ltd.) were put into an extruder for producing pellets to obtain resin composition pellets. Evaluation results of the resin composition are shown in Table 3.

### Comparative Example 3

Latex I-5 was obtained by the same manner as in Production Example 1 except that the amount of n-octyl mercaptan was changed to 0.08 part. Physical properties of polymer particles I-5 contained in the latex 1-5 are shown in Table 1.

In a vessel equipped with a stirrer, 65 parts (solid content) of the latex I-5 and 35 parts (solid content) of the latex II-1 were charged, followed by mixing homogeneously. Thereafter, a magnesium sulfate aqueous solution was added thereto for salting out and coagulation. The coagulated product was washed with water, dehydrated, and dried to obtain mixed particles.

Sixty parts of the mixed particles and 40 parts of methacrylic resin (Parapet "G-1000" manufactured by KURARAY Co., Ltd.) were put into an extruder for producing pellets to obtain resin composition pellets. Evaluation results of the resin composition are shown in Table 3.

### Comparative Example 4

Latex II-3 was obtained by the same manner as in Production Example 2 except that the amount of n-octyl mercaptan was changed to 0.20 part. Physical properties of polymer particles II-3 contained in the latex II-3 are shown in Table 2.

In a vessel equipped with a stirrer, 65 parts (solid content) of the latex I-1 and 35 parts (solid content) of the latex II-3 were charged, followed by mixing homogeneously. Thereafter, a magnesium sulfate aqueous solution was added thereto for salting out and coagulation. The coagulated product was washed with water, dehydrated, and dried to obtain mixed particles.

Sixty parts of the mixed particles and 40 parts of methacrylic resin (Parapet "G-1000" manufactured by KURARAY Co., Ltd.) were put into an extruder for producing pellets to obtain resin composition pellets. Evaluation results of the resin composition are shown in Table 3.

### Comparative Example 5

Latex II-4 was obtained by the same manner as in Production Example 2 except that the amount of n-octyl mercaptan was changed to 0.80 part. Physical properties of polymer particles II-4 contained in the latex II-4 are shown in Table 2.

In a vessel equipped with a stirrer, 65 parts (solid content) of the latex I-1 and 35 parts (solid content) of the latex II-4 were charged, followed by mixing homogeneously. Thereafter, a magnesium sulfate aqueous solution was added thereto for salting out and coagulation. The coagulated product was washed with water, dehydrated, and dried to obtain mixed particles.

Sixty parts of the mixed particles and 40 parts of methacrylic resin (Parapet "G-1000" manufactured by KURARAY Co., Ltd.) were put into an extruder for producing pellets to obtain resin composition pellets. Evaluation results of the resin composition are shown in Table 3.

### Comparative Example 6

Latex I-6 was obtained by the same manner as in Production Example 1 except that the amount of sodium polyoxyethylene alkyl ether acetate was changed to 0.070 part. Physical properties of polymer particles I-6 contained in the latex I-6 are shown in Table 1.

In a vessel equipped with a stirrer, 65 parts (solid content) of the latex 1-6 and 35 parts (solid content) of latex II-1 were charged, followed by mixing homogeneously. Thereafter, a magnesium sulfate aqueous solution was added thereto for salting out and coagulation. The coagulated product was washed with water, dehydrated, and dried to obtain mixed particles.

Sixty parts of the mixed particles and 40 parts of methacrylic resin (Parapet "G-1000" manufactured by KURARAY Co., Ltd.) were put into an extruder for producing pellets to obtain resin composition pellets. Evaluation results of the resin composition are shown in Table 3.

### Comparative Example 7

Latex II-5 was obtained by the same manner as in Production Example 2 except that the amount of sodium polyoxyethylene alkyl ether acetate was changed to 0.041 part. Physical properties of polymer particles II-5 contained in the latex II-5 are shown in Table 2.

In a vessel equipped with a stirrer, 65 parts (solid content) of the latex I-1 and 35 parts (solid content) of the latex II-5 were charged, followed by mixing homogeneously. Thereafter, a magnesium sulfate aqueous solution was added thereto for salting out and coagulation. The coagulated product was washed with water, dehydrated, and dried to obtain mixed particles.

Sixty parts of the mixed particles and 40 parts of methacrylic resin (Parapet "G-1000" manufactured by KURARAY Co., Ltd.) were put into an extruder for producing pellets to obtain resin composition pellets. Evaluation results of the resin composition are shown in Table 3.

### Comparative Example 8

In a vessel equipped with a stirrer, 50 parts (solid content) of the latex I-1 and 50 parts (solid content) of the latex II-1 were charged, followed by mixing homogeneously. Thereafter, a magnesium sulfate aqueous solution was added thereto for salting out and coagulation. The coagulated product was washed with water, dehydrated, and dried to obtain mixed particles.

Sixty parts of the mixed particles and 40 parts of methacrylic resin (Parapet "G-1000" manufactured by KURARAY Co., Ltd.) were put into an extruder for producing pellets to obtain resin composition pellets. Evaluation results of the resin composition are shown in Table 3.

### [Table 1]

**Table 1**

| Polymer Particles I | | I-1 | I-2 | I-3 | I-4 | I-5 | 1-6 |
|---|---|---|---|---|---|---|---|
| Layer constitution | | | | | | | |
| Innermost layer | | 34.8 | 34.8 | 34.8 | 34.8 | 34.8 | 34.8 |
| (Rigid Polymer c) [%] | | | | | | | |
| | methyl methacrylate[%] | 93.8 | 93.8 | 93.8 | 93.8 | 93.8 | 93.8 |
| | methyl acrylate[%] | 6.0 | 6.0 | 6.0 | 6.0 | 6.0 | 6.0 |
| | allyl methacrylate[%] | 0.2 | 0.2 | 0.2 | 0.2 | 0.2 | 0.2 |
| | Tg [°C] | 115 | 115 | 115 | 115 | 115 | 115 |
| Intermediate layer | | 45.4 | 45.4 | 45.4 | 45.4 | 45.4 | 45.4 |
| (Soft polymer i)[%] | | | | | | | |
| | n-buty acrylate[%] | 80.6 | 80.6 | 80.6 | 80.6 | 80.6 | 80.6 |
| | styrene[%] | 17.4 | 17.4 | 17.4 | 17.4 | 17.4 | 17.4 |
| | allyl methacrylate[%] | 2.0 | 2.0 | 2.0 | 2.0 | 2.0 | 2.0 |
| | Tg [°C] | -1 | -1 | -1 | -1 | -1 | -1 |
| Outermost layer | | 19.8 | 19.8 | 19.8 | 19.8 | 19.8 | 19.8 |
| (Rigid Polymer o)[%] | | | | | | | |
| | methyl methacrylate[%] | 93.9 | 93.9 | 93.9 | 93.9 | 93.9 | 93.9 |
| | methyl acrylate[%] | 6.1 | 6.1 | 6.1 | 6.1 | 6.1 | 6.1 |
| | Tg [°C] | 115 | 115 | 115 | 115 | 115 | 115 |

| Physicality | | | | | | | |
|---|---|---|---|---|---|---|---|
| | Acetone insoluble[%] | 95.0 | 95.0 | 95.0 | 95.0 | 95.0 | 95.0 |
| | Mw | 85000 | 85000 | 75000 | 85000 | 60000 | 85000 |
| | Dv [nm] | 220 | 230 | 180 | 310 | 220 | 140 |

### [Table 2]

**Table 2**

| Polymer Patrcles II | | II-1 | II-2 | II-3 | II-4 | II-5 |
|---|---|---|---|---|---|---|
| Layer constitution | | | | | | |
| mono-layer | | 100 | 100 | 100 | 100 | 100 |
| (Rigid Polymer s) [%] | | | | | | |
| | methyl methacrylate[%] | 90 | 85 | 90 | 90 | 90 |
| | methyl acrylate[%] | 10 | 15 | 10 | 10 | 10 |
| | Tg [°C] | 105 | 95 | 105 | 105 | 105 |

| Physicality | | | | | | |
|---|---|---|---|---|---|---|
| | Acetone insoluble [%] | 0 | 0 | 0 | 0 | 0 |
| | Mw | 75000 | 65000 | 120000 | 40000 | 75000 |
| | Dv[nm] | 110 | 90 | 110 | 110 | 170 |

### [Table 3]

**Table 3**

| | | | Ex. | | | Comp. Ex. | | | | | | | |
|---|---|---|---|---|---|---|---|---|---|---|---|---|---|
| | | | 1 | 2 | 3 | 1 | 2 | 3 | 4 | 5 | 6 | 7 | 8 |
| Mixed particles | | | | | | | | | | | | | |
| | | Particles I-1[%] | 65 | - | - | 85 | - | - | 65 | 65 | - | 65 | 50 |
| | | Particles I-2[%] | - | 60 | - | - | - | - | - | - | - | - | - |
| | | Particles I-3[%] | - | - | 70 | - | - | - | - | - | - | - | - |
| | | Particles I-4[%] | - | - | - | - | 65 | - | - | - | - | - | - |
| | | Particles I-5[%] | - | - | - | - | - | 65 | - | - | - | - | - |
| | | Particles I-6[%] | - | - | - | - | - | - | - | - | 65 | - | - |
| | | Particles II-1[%] | 35 | 40 | - | 15 | 35 | 35 | - | - | 35 | - | 50 |
| | | Particles II-2[%] | - | - | 30 | - | - | - | - | - | - | - | - |
| | | Particles II-3[%] | - | - | - | - | - | - | 35 | - | - | - | - |
| | | Particles II-4[%] | - | - | - | - | - | - | - | 35 | - | - | - |
| | | Particles II-5[%] | - | - | - | - | - | - | - | - | - | 35 | - |

| Methacrylic resin compostion | | | | | | | | | | | | | |
|---|---|---|---|---|---|---|---|---|---|---|---|---|---|
| | Mixed particles [pts.] | | 60 | 60 | 60 | 60 | 60 | 60 | 60 | 60 | 60 | 60 | 60 |
| | Methacrylic resin [pts.] | | 40 | 40 | 40 | 40 | 40 | 40 | 40 | 40 | 40 | 40 | 40 |

| Evaluation | | | | | | | | | | | | | |
|---|---|---|---|---|---|---|---|---|---|---|---|---|---|
| | Aggregation defect | | ○ | ○ | ○ | × | Δ | × | × | Δ | ○ | × | ○ |
| | High temp. whitening resistance | | ○ | ○ | ○ | × | × | ○ | ○ | ○ | ○ | ○ | ○ |
| | Impact resistance [kJ/m²] | | 6.0 | 5.5 | 5.5 | 5.0 | 6.5 | 6.0 | 6.0 | 4.0 | 3.0 | 6.0 | 4.0 |

## Claims

1. A resin composition comprising:
polymer particles I, each having a three-layered structure composed of an innermost layer made of a rigid polymer c comprising 80 to 100% by mass of a methacrylic acid ester unit, an intermediate layer made of a soft polymer i comprising 40 to 99.9% by mass of an acrylic acid ester unit and 0.1 to 5% by mass of a poly-functional monomer unit, wherein the soft polymer i has a glass transition temperature of less than 25°C, and an outermost layer made of a rigid polymer o comprising 80 to 100% by mass of a methacrylic acid ester unit,
wherein the polymer particles I have a weight-average molecular weight of an acetone soluble-matter of 70,000 to 100,000 and a volume average particle diameter determined by a light-scattering method of 150 to 300 nm; and
polymer particles II, each having a single-layered structure composed of only a layer made of a rigid polymer s comprising 80 to 100% by mass of a methacrylic acid ester unit, wherein the polymer particles II have a weight-average molecular weight of an acetone soluble-matter of 60,000 to 90,000 and a volume average particle diameter determined by a light-scattering method of not more than 150 nm,
wherein a mass ratio of the polymer particles I relative to the polymer particles II is 55/45 to 75/25, and
the weight-average molecular weight of the acetone soluble-matter in the polymer particles II is smaller than the weight-average molecular weight of the acetone soluble-matter in the polymer particles I by not less than 5000, and
wherein the glass transition temperature and the weight-average molecular weight of an acetone soluble-matter are determined as described in the description.

2. The resin composition according to claim 1, further comprising a thermoplastic resin other than the particles I and the particles II.

3. A resin composition composed of a melt-kneaded product comprising:
mixed particles comprising polymer particles I and polymer particles II in a mass ratio of the polymer particles I relative to the polymer particles II of 55/45 to 75/25, each of the polymer particles I having a three-layered structure composed of an innermost layer made of a rigid polymer c comprising 80 to 100% by mass of a methacrylic acid ester unit, an intermediate layer made of a soft polymer i comprising 40 to 99.9% by mass of an acrylic acid ester unit and 0.1 to 5% by mass of a poly-functional monomer unit, wherein the soft polymer i has a glass transition temperature of less than 25°C, and an outermost layer made of a rigid polymer o comprising 80 to 100% by mass of a methacrylic acid ester unit,
wherein the polymer particles I have a weight-average molecular weight of an acetone soluble-matter of 70,000 to 100,000 and a volume average particle diameter determined by a light-scattering method of 150 to 300 nm, and each of the polymer particles II having a single-layered structure composed of only a layer made of a rigid polymer s comprising 80 to 100% by mass of a methacrylic acid ester unit, wherein the polymer particles II have a weight-average molecular weight of an acetone soluble-matter of 60,000 to 90,000 and a volume average particle diameter determined by a light-scattering method of not more than 150 nm; and
a thermoplastic resin other than the mixed particles,
wherein the weight-average molecular weight of the acetone soluble-matter in the polymer particles II is smaller than the weight-average molecular weight of the acetone soluble-matter in the polymer particles I by not less than 5000, and
wherein the glass transition temperature and the weight-average molecular weight of an acetone soluble-matter are determined as described in the description.

4. The resin composition according to claim 2 or 3, wherein the thermoplastic resin is a methacrylic resin.

5. The resin composition according to claim 2 or 3, wherein the thermoplastic resin is a methacrylic resin having a melt flow rate (according to ASTM-D1238) at 230 °C and under a load of 3.8 kg of 0.5 to 20 g/10 min.

6. A film comprising the resin composition according to any one of claims 2 to 5.

7. A production method of the resin composition according to claim 1, the method comprising:
carrying out emulsion polymerization of 80 to 100% by mass of a methacrylic acid ester and 0 to 20% by mass of another monomer copolymerizable with the methacrylic acid ester, emulsion polymerization of 40 to 99.9% by mass of an acrylic acid ester, 0.1 to 5% by mass of a poly-functional monomer and 0 to 59.9% by mass of another monomer copolymerizable with the acrylic acid ester and the poly-functional monomer, and emulsion polymerization of 80 to 100% by mass of a methacrylic acid ester and 0 to 20% by mass of another monomer copolymerizable with the methacrylic acid ester, sequentially in this order, to obtain a latex comprising polymer particles I;
carrying out emulsion polymerization of 80 to 100% by mass of a methacrylic acid ester and 0 to 20% by mass of another monomer copolymerizable with the methacrylic acid ester to obtain a latex comprising polymer particles II; and
mixing the latex comprising the polymer particles I and the latex comprising the polymer particles II to obtain a mixed latex.

8. The production method according to claim 7, further comprising coagulating the mixed latex and drying the obtained coagulated product to obtain mixed particles comprising the polymer particles I and the polymer particles II.

9. The production method according to claim 7, further comprising melt-kneading the mixed particles and a thermoplastic resin other than the mixed particles.

10. A production method of a resin composition, the method comprising mixing polymer particles I and polymer particles II in a mass ratio of the polymer particles I relative to the polymer particles II of 55/45 to 75/25 to obtain mixed particles, each of the polymer particles I having a three-layered structure composed of an innermost layer made of a rigid polymer c comprising 80 to 100% by mass of a methacrylic acid ester unit, an intermediate layer made of a soft polymer i comprising 40 to 99.9% by mass of an acrylic acid ester unit and 0.1 to 5% by mass of a poly-functional monomer unit, wherein the soft polymer i has a glass transition temperature of less than 25°C, and an outermost layer made of a rigid polymer o comprising 80 to 100% by mass of a methacrylic acid ester unit, wherein the polymer particles I have a weight-average molecular weight of an acetone soluble-matter of 70,000 to 100,000 and a volume average particle diameter determined by a light-scattering method of 150 to 300 nm; and each of the polymer particles II having a single-layered structure composed of only a layer made of a rigid polymer s comprising 80 to 100% by mass of a methacrylic acid ester unit, wherein the polymer particles II have a weight-average molecular weight of an acetone soluble-matter of 60,000 to 90,000 and a volume average particle diameter determined by a light-scattering method of not more than 150 nm; and melt-kneading the mixed particles and a thermoplastic resin other than the mixed particles,
wherein the weight-average molecular weight of the acetone soluble-matter in the polymer particles II is smaller than the weight-average molecular weight of the acetone soluble-matter in the polymer particles I by not less than 5000, and
wherein the glass transition temperature and the weight-average molecular weight of an acetone soluble-matter are determined as described in the description.

11. The production method according to claim 9 or 10, wherein the thermoplastic resin is a methacrylic resin.

12. The production method according to claim 9 or 10, wherein the thermoplastic resin is a methacrylic resin having a melt flow rate (according to ASTM-D1238) at 230 °C and under a load of 3.8 kg of 0.5 to 20 g/10 min.

## Patentansprüche

1. Harzzusammensetzung, umfassend:
Polymerteilchen I, jeweils aufweisend eine Dreischichtstruktur, zusammengesetzt aus einer innersten Schicht aus einem starren Polymer c, umfassend 80 bis 100 Massen-% einer Methacrylsäureestereinheit, einer Zwischenschicht aus einem weichen Polymer i, umfassend 40 bis 99,9 Massen-% einer Acrylsäureestereinheit und 0,1 bis 5 Massen-% einer polyfunktionalen Monomereinheit, wobei das weiche Polymer i eine Glasübergangstemperatur von weniger als 25 °C aufweist, und einer äußersten Schicht aus einem starren Polymer o, umfassend 80 bis 100 Massen-% einer Methacrylsäureestereinheit, wobei die Polymerteilchen I ein gewichtsgemitteltes Molekulargewicht einer in Aceton löslichen Substanz von 70000 bis 100000 und einen volumengemittelten Teilchendurchmesser, bestimmt durch ein Lichtstreuungsverfahren, von 150 bis 300 nm aufweisen; und
Polymerteilchen II, jeweils aufweisend eine Einzelschichtstruktur, zusammengesetzt aus lediglich einer Schicht aus einem starren Polymer s, umfassend 80 bis 100 Massen-% einer Methacrylsäureestereinheit, wobei die Polymerteilchen II ein gewichtsgemitteltes Molekulargewicht einer in Aceton löslichen Substanz von 60000 bis 90000 und einen volumengemittelten Teilchendurchmesser, bestimmt durch ein Lichtstreuungsverfahren, von nicht mehr als 150 nm aufweisen,
wobei ein Massenverhältnis der Polymerteilchen I in Bezug auf die Polymerteilchen II 55/45 bis 75/25 beträgt, und
das gewichtsgemittelte Molekulargewicht der in Aceton löslichen Substanz in den Polymerteilchen II um nicht weniger als 5000 kleiner ist als das gewichtsgemittelte Molekulargewicht der in Aceton löslichen Substanz in den Polymerteilchen I, und
wobei die Glasübergangstemperatur und das gewichtsgemittelte Molekulargewicht einer in Aceton löslichen Substanz wie in der Beschreibung beschrieben bestimmt werden.

2. Harzzusammensetzung nach Anspruch 1, weiter umfassend ein von den Teilchen I und den Teilchen II verschiedenes thermoplastisches Harz.

3. Harzzusammensetzung, zusammengesetzt aus einem schmelzknetbaren Produkt, umfassend:
gemischte Teilchen, umfassend Polymerteilchen I und Polymerteilchen II in einem Massenverhältnis der Polymerteilchen I in Bezug auf die Polymerteilchen II von 55/45 bis 75/25, wobei die Polymerteilchen I jeweils eine Dreischichtstruktur aufweisen, zusammengesetzt aus einer innersten Schicht aus einem starren Polymer c, umfassend 80 bis 100 Massen-% einer Methacrylsäureestereinheit, einer Zwischenschicht aus einem weichen Polymer i, umfassend 40 bis 99,9 Massen-% einer Acrylsäureestereinheit und 0,1 bis 5 Massen-% einer polyfunktionalen Monomereinheit, wobei das weiche Polymer i eine Glasübergangstemperatur von weniger als 25 °C aufweist, und einer äußersten Schicht aus einem starren Polymer o, umfassend 80 bis 100 Massen-% einer Methacrylsäureestereinheit, wobei die Polymerteilchen I ein gewichtsgemitteltes Molekulargewicht einer in Aceton löslichen Substanz von 70000 bis 100000 und einen volumengemittelten Teilchendurchmesser, bestimmt durch ein Lichtstreuungsverfahren, von 150 bis 300 nm aufweisen, und die Polymerteilchen II jeweils eine Einzelschichtstruktur aufweisen, zusammengesetzt aus lediglich einer Schicht aus einem starren Polymer s, umfassend 80 bis 100 Massen-% einer Methacrylsäureestereinheit, wobei die Polymerteilchen II ein gewichtsgemitteltes Molekulargewicht einer in Aceton löslichen Substanz von 60000 bis 90000 und einen volumengemittelten Teilchendurchmesser, bestimmt durch ein Lichtstreuungsverfahren, von nicht mehr als 150 nm aufweisen; und
ein von den gemischten Teilchen verschiedenes thermoplastisches Harz,
wobei das gewichtsgemittelte Molekulargewicht der in Aceton löslichen Substanz in den Polymerteilchen II um nicht weniger als 5000 kleiner ist als das gewichtsgemittelte Molekulargewicht der in Aceton löslichen Substanz in den Polymerteilchen I, und
wobei die Glasübergangstemperatur und das gewichtsgemittelte Molekulargewicht einer in Aceton löslichen Substanz wie in der Beschreibung beschrieben bestimmt werden.

4. Harzzusammensetzung nach Anspruch 2 oder 3, wobei das thermoplastische Harz ein Methacrylharz ist.

5. Harzzusammensetzung nach Anspruch 2 oder 3, wobei das thermoplastische Harz ein Methacrylharz mit einer Schmelzflussrate (gemäß ASTM-D1238) von 0,5 bis 20 g/10 min bei 230 °C und unter einer Last von 3,8 kg ist.

6. Folie, umfassend die Harzzusammensetzung nach einem der Ansprüche 2 bis 5.

7. Herstellungsverfahren der Harzzusammensetzung nach Anspruch 1, wobei das Verfahren umfasst:
das aufeinanderfolgende Durchführen einer Emulsionspolymerisation von 80 bis 100 Massen-% eines Methacrylsäureesters und 0 bis 20 Massen-% eines anderen Monomers, welches mit dem Methacrylsäureester copolymerisierbar ist, einer Emulsionspolymerisation von 40 bis 99,9 Massen-% eines Acrylsäureesters, 0,1 bis 5 Massen-% eines polyfunktionalen Monomers und 0 bis 59,9 Massen-% eines anderen Monomers, welches mit dem Acrylsäureester und dem polyfunktionalen Monomer copolymerisierbar ist, und einer Emulsionspolymerisation von 80 bis 100 Massen-% eines Methacrylsäureesters und 0 bis 20 Massen-% eines anderen Monomers, welches mit dem Methacrylsäureester copolymerisierbar ist, in dieser Reihenfolge, um ein Latex, umfassend Polymerteilchen I zu erhalten;
das Durchführen einer Emulsionspolymerisation von 80 bis 100 Massen-% eines Methacrylsäureesters und 0 bis 20 Massen-% eines anderen Monomers, welches mit dem Methacrylsäureester copolymerisierbar ist, um ein Latex, umfassend Polymerteilchen II zu erhalten; und
das Mischen des Latex, umfassend die Polymerteilchen I, und des Latex, umfassend die Polymerteilchen II, um ein gemischtes Latex zu erhalten.

8. Herstellungsverfahren nach Anspruch 7, weiter umfassend das Koagulieren des gemischten Latex und das Trocknen des erhaltenen koagulierten Produkts, um gemischte Teilchen, umfassend die Polymerteilchen I und die Polymerteilchen II, zu erhalten.

9. Herstellungsverfahren nach Anspruch 7, weiter umfassend das Schmelzkneten der gemischten Teilchen und eines von den gemischten Teilchen verschiedenen thermoplastischen Harzes.

10. Herstellungsverfahren einer Harzzusammensetzung, wobei das Verfahren das Mischen von Polymerteilchen I und Polymerteilchen II in einem Massenverhältnis der Polymerteilchen I in Bezug auf die Polymerteilchen II von 55/45 bis 75/25, um gemischte Teilchen zu erhalten, wobei jedes der Polymerteilchen I eine Dreischichtstruktur aufweist, zusammengesetzt aus einer innersten Schicht aus einem starren Polymer c, umfassend 80 bis 100 Massen-% einer Methacrylsäureestereinheit, einer Zwischenschicht aus einem weichen Polymer i, umfassend 40 bis 99,9 Massen-% einer Acrylsäureestereinheit und 0,1 bis 5 Massen-% einer polyfunktionalen Monomereinheit, wobei das weiche Polymer i eine Glasübergangstemperatur von weniger als 25 °C aufweist, und einer äußersten Schicht aus einem starren Polymer o, umfassend 80 bis 100 Massen-% einer Methacrylsäureestereinheit, wobei die Polymerteilchen I ein gewichtsgemitteltes Molekulargewicht einer in Aceton löslichen Substanz von 70000 bis 100000 und einen volumengemittelten Teilchendurchmesser, bestimmt durch ein Lichtstreuungsverfahren, von 150 bis 300 nm aufweisen; und jedes der Polymerteilchen II eine Einzelschichtstruktur aufweist, zusammengesetzt aus lediglich einer Schicht aus einem starren Polymer s, umfassend 80 bis 100 Massen-% einer Methacrylsäureestereinheit, wobei die Polymerteilchen II ein gewichtsgemitteltes Molekulargewicht einer in Aceton löslichen Substanz von 60000 bis 90000 und einen volumengemittelten Teilchendurchmesser, bestimmt durch ein Lichtstreuungsverfahren, von nicht mehr als 150 nm aufweisen; und
das Schmelzkneten der gemischten Teilchen und eines von den gemischten Teilchen verschiedenen thermoplastischen Harzes
umfasst,
wobei das gewichtsgemittelte Molekulargewicht der in Aceton löslichen Substanz in den Polymerteilchen II um nicht weniger als 5000 kleiner ist als das gewichtsgemittelte Molekulargewicht der in Aceton löslichen Substanz in den Polymerteilchen I, und
wobei die Glasübergangstemperatur und das gewichtsgemittelte Molekulargewicht einer in Aceton löslichen Substanz wie in der Beschreibung beschrieben bestimmt werden.

11. Herstellungsverfahren nach Anspruch 9 oder 10, wobei das thermoplastische Harz ein Methacrylharz ist.

12. Herstellungsverfahren nach Anspruch 9 oder 10, wobei das thermoplastische Harz ein Methacrylharz mit einer Schmelzflussrate (gemäß ASTM-D1238) von 0,5 bis 20 g/10 min bei 230 °C und unter einer Last von 3,8 kg ist.

## Revendications

1. Composition de résine comprenant :
des particules polymères I, chacune ayant une structure trichouche composée d'une couche la plus intérieure constituée d'un polymère rigide c comprenant 80 à 100% en masse d'une unité ester d'acide méthacrylique, une couche intermédiaire constituée d'un polymère souple i comprenant 40 à 99,9% en masse d'une unité ester d'acide acrylique et 0,1 à 5% en masse d'une unité monomère polyfonctionnel, le polymère souple i ayant une température de transition vitreuse inférieure à 25°C, et une couche la plus extérieure constituée d'un polymère rigide o comprenant 80 à 100% en masse d'une unité ester d'acide méthacrylique, où les particules polymères I ont un poids moléculaire moyen en poids de la matière soluble dans l'acétone allant de 70 000 à 100 000 et un diamètre particulaire moyen en volume, déterminé par un procédé de diffusion de la lumière allant de 150 à 300 nm ; et des particules polymères II, chacune ayant une structure monochouche composée uniquement d'une couche constituée d'un polymère rigide s comprenant 80 à 100% en masse d'une unité ester d'acide méthacrylique, où les particules polymères Il ont un poids moléculaire moyen en poids de la matière soluble dans l'acétone allant de 60 000 à 90 000 et un diamètre particulaire moyen en volume déterminé par un procédé de diffusion de la lumière non supérieur à 150 nm ;
dans laquelle le rapport massique des particules polymères I aux particules polymères Il se situe dans l'intervalle allant de 55/45 à 75/25, et le poids moléculaire moyen en poids de la matière soluble dans l'acétone pour les particules polymères Il est inférieur au poids moléculaire moyen en poids de la matière soluble dans l'acétone pour les particules polymères I de pas moins de 5000, et
dans laquelle la température de transition vitreuse et le poids moléculaire moyen en poids de la matière soluble dans l'acétone sont déterminés selon la procédure présentée dans la description.

2. Composition de résine selon la revendication 1, comprenant en outre, une résine thermoplastique autre que les particules I et les particules Il.

3. Composition de résine composée d'un produit malaxé à l'état fondu, comprenant :
un mélange de particules comprenant des particules polymères I et des particules polymères Il en un rapport massique des particules polymères I aux particules polymères Il situé dans l'intervalle allant de 55/45 à 75/25, chacune des particules polymères I ayant une structure trichouche composée d'une couche la plus intérieure constituée d'un polymère rigide c comprenant 80 à 100% en masse d'une unité ester d'acide méthacrylique, une couche intermédiaire constituée d'un polymère souple i comprenant 40 à 99,9% en masse d'une unité ester d'acide acrylique et 0,1 à 5% en masse d'une unité monomère polyfonctionnel, le polymère souple i ayant une température de transition vitreuse inférieure à 25°C, et une couche la plus extérieure constituée d'un polymère rigide o comprenant 80 à 100% en masse d'une unité ester d'acide méthacrylique, où les particules polymères I ont un poids moléculaire moyen en poids de la matière soluble dans l'acétone allant de 70 000 à 100 000 et un diamètre particulaire moyen en volume, déterminé par un procédé de diffusion de la lumière, allant de 150 à 300 nm, et chacune des particules polymères Il ayant une structure monochouche composée uniquement d'une couche constituée d'un polymère rigide s comprenant 80 à 100% en masse d'une unité ester d'acide méthacrylique, où les particules polymères Il ont un poids moléculaire moyen en poids de la matière soluble dans l'acétone allant de 60 000 à 90 000 et un diamètre particulaire moyen en volume, déterminé par un procédé de diffusion de la lumière, non supérieur à 150 nm ; et
une résine thermoplastique autre que le mélange de particules,
dans laquelle le poids moléculaire moyen en poids de la matière soluble dans l'acétone pour les particules polymères Il est inférieur au poids moléculaire moyen en poids de la matière soluble dans l'acétone pour les particules polymères I de pas moins de 5000, et
dans laquelle la température de transition vitreuse et le poids moléculaire moyen en poids de la matière soluble dans l'acétone sont déterminés selon la procédure présentée dans la description.

4. Composition de résine selon la revendication 2 ou 3, dans laquelle la résine thermoplastique est une résine méthacrylique.

5. Composition de résine selon la revendication 2 ou 3, dans laquelle la résine thermoplastique est une résine méthacrylique ayant un indice de fluidité (selon ASTM-D1238) à 230°C et sous une charge de 3,8 kg, située dans l'intervalle allant de 0,5 à 20 g/10 min.

6. Film comprenant la composition de résine selon l'une quelconque des revendications 2 à 5.

7. Procédé de production d'une composition de résine selon la revendication 1, le procédé comprenant :
la réalisation d'une polymérisation en émulsion de 80 à 100% en masse d'un ester d'acide méthacrylique et de 0 à 20% en masse d'un autre monomère copolymérisable avec l'ester d'acide méthacrylique, d'une polymérisation en émulsion de 40 à 99,9% en masse d'un ester d'acide acrylique, 0,1 à 5% en masse d'un monomère polyfonctionnel et 0 à 59,9% en masse d'un autre monomère copolymérisable avec l'ester d'acide acrylique et le monomère polyfonctionnel, et d'une polymérisation en émulsion de 80 à 100% en masse d'un ester d'acide méthacrylique et de 0 à 20% en masse d'un autre monomère copolymérisable avec l'ester d'acide méthacrylique, séquentiellement en cet ordre, pour obtenir un latex comprenant les particules polymères I ;
la réalisation d'une polymérisation en émulsion de 80 à 100% en masse d'un ester d'acide méthacrylique et de 0 à 20% en masse d'un autre monomère copolymérisable avec l'ester d'acide méthacrylique pour obtenir un latex comprenant les particules polymères II; et
le mélange du latex comprenant les particules polymères I et du latex comprenant les particules polymères Il pour obtenir un latex mixte.

8. Procédé de production selon la revendication 7, comprenant en outre, la coagulation du latex mixte et le séchage du produit coagulé obtenu pour obtenir des particules mélangées comprenant les particules polymères I et les particules polymères II.

9. Procédé de production selon la revendication 7, comprenant en outre, le malaxage à l'état fondu des particules mélangées et d'une résine thermoplastique autre que les particules mélangées.

10. Procédé de production d'une composition de résine, le procédé comprenant le mélange de particules polymères I et de particules polymères Il en un rapport massique des particules polymères I aux particules polymères Il allant de 55/45 à 75/25 pour obtenir des particules mélangées, chacune des particules polymères I ayant une structure trichouche composée d'une couche la plus intérieure constituée d'un polymère rigide c comprenant 80 à 100% en masse d'une unité ester d'acide méthacrylique, une couche intermédiaire constituée d'un polymère souple i comprenant 40 à 99,9% en masse d'une unité ester d'acide acrylique et 0,1 à 5% en masse d'une unité monomère polyfonctionnel, le polymère souple i ayant une température de transition vitreuse inférieure à 25°C, et une couche la plus extérieure, constituée d'un polymère rigide o comprenant 80 à 100% en masse d'une unité ester d'acide méthacrylique, où les particules polymères I ont un poids moléculaire moyen en poids de la matière soluble dans l'acétone allant de 70 000 à 100 000 et un diamètre particulaire moyen en volume, déterminé par un procédé de diffusion de la lumière, allant de 150 à 300 nm ; et chacune des particules polymères Il ayant une structure monochouche composée uniquement d'une couche constituée d'un polymère rigide s comprenant 80 à 100% en masse d'une unité ester d'acide méthacrylique, où les particules polymères Il ont un poids moléculaire moyen en poids de la matière soluble dans l'acétone allant de 60 000 à 90 000 et un diamètre particulaire moyen en volume, déterminé par un procédé de diffusion de la lumière, non supérieur à 150 nm ; et le malaxage à l'état fondu des particules mélangées et d'une résine thermoplastique autre que les particules mélangées,
dans lequel le poids moléculaire moyen en poids de la matière soluble dans l'acétone pour les particules polymères Il est inférieur au poids moléculaire moyen en poids de la matière soluble dans l'acétone pour les particules polymères I de pas moins de 5000, et
dans lequel la température de transition vitreuse et le poids moléculaire moyen en poids de la matière soluble dans l'acétone sont déterminés selon la procédure présentée dans la description.

11. Procédé de production selon la revendication 9 ou 10, dans lequel la résine thermoplastique est une résine méthacrylique.

12. Procédé de production selon la revendication 9 ou 10, dans lequel la résine thermoplastique est une résine méthacrylique ayant un indice de fluidité (selon ASTM-D1238) à 230°C et sous une charge de 3,8 kg, située dans l'intervalle allant de 0,5 à 20 g/10 min.
